# EUROPEAN PATENT SPECIFICATION

(11) **EP 2 551 302 B1**
(45) Date of publication and mention of the grant of the patent: **04.03.2015**
(21) Application number: 11759341.8
(22) Date of filing: 18.03.2011
(51) Int. Cl.: C08L 101/00, C08K 3/04, C08K 7/00, C08L 23/10, B32B 27/20

(54) **SYNTHETIC RESIN LAMINATE**
KUNSTHARZLAMINAT
STRATIFIÉ DE RÉSINE SYNTHÉTIQUE

(30) Priority: 08.09.2010 JP 2010200604; 25.03.2010 JP 2010069277
(43) Date of publication of application: 30.01.2013
(60) Divisional application: 13159914.4
(73) Proprietor: Sekisui Chemical Co., Ltd., Osaka-shi, Osaka 530-8565 (JP)
(72) Inventor: TAKAHASHI Katsunori, Mishima-gun Osaka 618-8589 (JP); INUI Nobuhiko, Mishima-gun Osaka 618-8589 (JP); NAGATANI Naoyuki, Mishima-gun Osaka 618-8589 (JP); MUKOHATA Daisuke, Mishima-gun Osaka 618-8589 (JP); TANIGUCHI Kouji, Mishima-gun Osaka 618-8589 (JP); NARUTA Mitsuru, Mishima-gun Osaka 618-8589 (JP)
(74) Representative: Ter Meer Steinmeister & Partner
(86) International application number: PCT/JP2011/056612
(87) International publication number: WO 2011/118535

(56) References cited:
- WO-A1-2009/040520
- JP-A- 2006 282 843
- JP-A- 2006 307 367
- JP-A- 2008 150 400
- JP-A- 2008 222 955
- JP-A- 2010 506 013
- US-A- 5 186 919

## Description

### TECHNICAL FIELD

The present invention relates to a synthetic resin laminate.

### BACKGROUND ART

Heretofore, resin compositions containing graphite particles have been studied in various applications. Patent Document 1 has disclosed a resin composition containing 10 to 60% by weight of a resin and 40 to 90% by weight of a graphite having a particle diameter of 20 to 900 µm (the sum total of the two ingredients is 100% by weight), as a resin composition having low thermal expandability, high strength, high rigidity, and toughness.

Patent Document 1 has disclosed that the shape of the graphite is preferably a plate-like shape, a flake-like shape, or a scale-like shape and also has disclosed that if the graphite is of a flake-like shape or a plate-like shape, mechanical properties, toughness and dimensional stability become high. In addition, it has been disclosed that the resin composition of Patent Document 1 is particularly suitable for housings of optical instruments or electronic instruments.

However, the resin composition disclosed in Patent Document 1 has problems that it is insufficient in moldability because of its large content of the graphite and molded articles obtained using the resin composition may be low in surface smoothness or weak against external impact.

Patent Document 2 has disclosed a thermally conductive resin composition containing a polyamide resin (A), a graphite-based filler (B), and an aramid fiber (C), wherein the mass ratio (A/B) of the polyamide resin (A) to the graphite-based filler (B) is 15/85 to 60/40, and the content of the aramid fiber (C) is 3 to 20 parts by mass relative to 100 parts by mass of the polyamide resin (A) and the graphite-based filler (B) in total. Patent Document 2 has disclosed that the graphite-based filler (B) is a scaly graphite having an average particle diameter of 1 to 300 µm and/or a graphitized carbon fiber having an average fiber diameter of 1 to 30 µm and an average fiber length of 1 to 20 mm.

However, the thermally conductive resin composition disclosed in Patent Document 2 has a problem that molded articles made of the thermally conductive resin composition are remarkably low in surface property because of the use of a fibrous filler.

Incidentally, resin compositions superior in moldability and capable of affording molded articles superior in surface smoothness, high in modulus of tensile elasticity and low in coefficient of linear expansion have recently been demanded as materials substitutable for metals.

### PRIOR ART DOCUMENTS

### Patent Documents

Patent Document 1: JP 2004-033290 A
Patent Document 2: JP 2009-292889 A

### SUMMARY OF THE INVENTION

### Problems to Be Solved by the Invention

The present invention provides a synthetic resin laminate as defined in claim 1. The synthetic resin laminate is produced by using a resin composition which can be molded easily and from which can be obtained synthetic resin molded articles superior in mechanical strength such as modulus of tensile elasticity, appearance such as surface smoothness, and dimensional stability.

### Means for Solving the Problems

The resin composition comprises a synthetic resin and a flaked graphite that is a laminate of graphene sheets the number of which is 150 or less and that has an aspect ratio of 20 or more.

Although the synthetic resin may be either a thermoplastic resin or a thermosetting resin, it is preferably a thermoplastic resin because this makes it easy to produce synthetic resin molded articles.

The thermoplastic resin is not particularly restricted and examples thereof include polyolefin-based resins, polyamide-based resins, ABS resin, polyacrylonitrile (PAN), (meth)acryl-based resins, and cellulose-based resins. A polyolefin-based resin is preferred as the thermoplastic resin because it is superior in moldability and also superior in weather resistance of synthetic resin molded articles to be obtained therefrom. A polyamide-based resin is preferred as the thermoplastic resin because it is superior in moldability and also superior in heat resistance of synthetic resin molded articles. Polyacrylonitrile is preferred as the thermoplastic resin because it is superior in moldability and also superior in heat resistance, weather resistance and chemical resistance of synthetic fibers to be obtained therefrom. A (meth)acryl-based resin is preferred and a methacryl-based resin is more preferred as the thermoplastic resin because they are superior in moldability and also superior in transparency of synthetic resin molded articles. In the present invention, (meth)acryl means methacryl or acryl.

The polyolefin-based resin is a resin produced by polymerizing olefin-based monomers having a radically polymerizable double bond. The olefin-based monomers are not particularly restricted and examples thereof include α-olefins such as ethylene, propylene, 1-butene, 1-pentene, 1-hexene, 1-heptene, 1-octene, and 4-methyl-1-pentene, and conjugated dienes such as butadiene and isoprene. As the olefin-based monomers, either a single kind of monomers may be used or two or more kinds of monomers may be used together.

The polyolefin-based resin is not particularly restricted and examples thereof include polyethylene-based resins such as ethylene homopolymers, ethylene-α-olefin copolymers, ethylene-(meth)acrylic acid copolymers, ethylene-(meth)acrylic acid ester copolymers, and ethylene-vinyl acetate copolymers, polypropylene-based resins such as propylene homopolymers, propylene-α-olefin copolymers, propylene-ethylene random copolymers, and propylene-ethylene block copolymers, butene homopolymers, and homopolymers or copolymers of conjugated dienes such as butadiene and isoprene. Polypropylene-based resins are preferred and propylene homopolymers are more preferred because synthetic resin molded articles such as synthetic resin sheets and synthetic resin laminates (hereinafter collectively referred to simply as "synthetic resin molded articles") to be obtained by using a resin composition are superior in modulus of elasticity and strength at break. As the polyolefin-based resin, either a single kind of resin may be used or two or more kinds of resins may be used together. Polypropylene-based resins are marketed, for example, under the trade name "J-721GR" by Prime Polymer Co., Ltd. Examples of the α-olefin include ethylene, 1-butene, 1-pentene, 4-methyl-1-pentene, 1-hexene, 1-octene, 1-nonene, and 1-decene.

The weight average molecular weight of a polyolefin-based resin is preferably 5000 to 5000000, and more preferably 20000 to 300000. The molecular weight distribution (weight average molecular weight/number average molecular weight) of a polyolefin-based resin is preferably 1.1 to 80, and more preferably 1.5 to 40. The weight average molecular weight of a polyolefin-based resin can be measured by a gel permeation chromatography method (GPC method), for example, by using a high temperature GPC (150 CV) marketed by WATERS.

The polyamide-based resin is not particularly restricted as far as it is a resin having an amide bond in repeating units of the main chain and examples thereof include polyamide 6, polyamide 6,6, polyamide 6,10, polyamide 6,12, polyamide 4, polyamide 11, polyamide 12, and polyamide 4,6. The polyamide-based resin may be a low crystalline polyamide containing an aromatic diamine, an aromatic dicarboxylic acid, or the like as a monomer component.

The (meth)acryl-based resin is not particularly restricted and examples thereof include methyl methacrylate homopolymers, copolymers of methacrylic acid esters containing methyl methacrylate, methyl methacrylate-acrylic acid ester copolymers, methyl methacrylate-acrylic acid copolymers, methyl methacrylate-acrylic acid copolymers, methyl methacrylate-methacrylic acid copolymers, methyl methacrylate-styrene copolymers, methyl methacrylate-α-methylstyrene copolymers, methyl methacrylate-acrylonitrile copolymers, and methyl methacrylate-butadiene copolymers. Examples of the methacrylic acid ester to be copolymerized with methyl methacrylate include ethyl methacrylate and butyl methacrylate.

The resin composition contains the flaked graphite. The flaked graphite is a laminate of a plurality of graphene sheets. The flaked graphite is a material that is obtained by subjecting a graphite to an exfoliating treatment. The flaked graphite is a laminate of graphene sheets thinner than a graphite used as a raw material, that is, a laminate of graphene sheets that is smaller in the number of graphene sheets laminated than the graphite used as a raw material. In the present invention, a graphene sheet means a sheet-like material composed of a carbon hexagonal plane.

The flaked graphite contained in the resin composition is made of graphene sheets laminated, wherein the number of graphene sheets laminated is 150 or less and the aspect ratio is 20 or more. The number of graphene sheets laminated of the flaked graphite is limited to 150 or less and is preferably 60 or less, more preferably 30 or less, particularly preferably 10 or less, and most preferably 5 or less. By limiting the number of graphene sheets laminated of the flaked graphite to 150 or less, the aspect ratio of the flaked graphite becomes large easily; when the weights of the flaked graphite contained in synthetic resins are equal, the contact area of the flaked graphite with a synthetic resin increases and the contact area of the flaked graphite itself also increases and therefore a synthetic resin molded article to be obtained using a resin composition is superior in rigidity and low in coefficient of linear expansion and it can acquire great modification effects such as impartation of conductivity. The number of graphene sheets laminated in the flaked graphite can be measured by using a transmission electron microscope (TEM) and it means the arithmetic mean value of the numbers of graphene sheets laminated in respective flaked graphites.

Although the aspect ratio of the flaked graphite is limited to 20 or more and is preferably 100 or more and more preferably 200 or more, it is preferably 5000 or less because breakage of the flaked graphite may occur if it is excessively high. The aspect ratio of the flaked graphite means the arithmetic mean value of the aspect ratios of respective flaked graphites calculated for each flaked graphite by dividing the maximum dimension in the plane direction of a graphene sheet by the thickness.

The maximum dimension in the plane direction of a graphene sheet in a flaked graphite means the maximum dimension of the flaked graphite when the flaked graphite is viewed from a direction in which the flaked graphite looks largest in its area. The thickness of the flaked graphite means the maximum dimension of the flaked graphite in a direction perpendicular to the surface of the flaked graphite when the flaked graphite is viewed from a direction in which the flaked graphite looks largest in its area.

The maximum dimension in the plane direction of a graphene sheet in a flaked graphite can be measured by using an FE-SEM. The thickness of a flaked graphite can be measured by using a transmission electron microscope (TEM) or an FE-SEM.

The flaked graphite is obtained by exfoliating a graphite between graphene sheets. Examples of the graphite include natural graphite, kish graphite, and highly oriented pyrolytic graphite.

The method for exfoliating the graphite between graphene sheets is not particularly restricted and examples thereof include: (1) a method in which a graphite is exfoliated between graphene sheets using the Hummers-Offeman method (W. S. Hummers et al., J. Am. Chem. Soc., 80, 1339 (1958)) as disclosed in JP 2002-053313 A; (2) a method in which graphite oxide is prepared from a graphite as disclosed in United States Patent No. 2798878 (1957) and then the graphite oxide is exfoliated between graphene sheets by purification; (3) a method in which a graphite oxide intercalation compound is prepared by the method disclosed in JP 2009-511415 T and then the graphite oxide intercalation compound is exfoliated between graphene sheets thereof by rapidly heating the graphite oxide intercalation compound; (4) a method in which a commercially available, thermally expandable graphite is heated to expand and then the expanded graphite is exfoliated between graphene sheets by applying an ultrasonic wave to the expanded graphite; and (5) a method in which a graphite is exfoliated between graphene sheets thereof through exposure of the graphite to a high-pressure fluid such as a supercritical fluid or a subcritical fluid. A thermally expandable graphite is marketed, for example, under the trade name "LTE-U" by Air Water, Inc.

As to the method for adjusting the aspect ratio of the flaked graphite to be within the above-mentioned ranges, this purpose can be achieved by adjusting conditions according to circumstances in the methods in which a graphite is exfoliated between graphene sheets. For example, in the above-described method (4), it can be attained by adjusting the sound pressure or the irradiation time of the ultrasonic wave to be applied to the expanded graphite.

Specifically, if the sound pressure of an ultrasonic wave in application of the ultrasonic wave to an expanded graphite is excessively low, exfoliation of a flaked graphite may occur insufficiently between graphene sheets, whereas if it is excessively high, graphene sheets will be pulverized, so that the maximum dimension of the flaked graphite in the plane direction of a graphene sheet may become excessively short. The sound pressure, therefore, is preferably 20 to 700 kPa, and more preferably 70 to 500 kPa.

If the irradiation time of an ultrasonic wave in application of the ultrasonic wave to an expanded graphite is excessively short, exfoliation of a flaked graphite may occur insufficiently between graphene sheets, whereas if it is excessively long, graphene sheets will be pulverized, so that the maximum dimension of a graphene sheet of a flaked graphite in the plane direction thereof may become excessively short. The irradiation time, therefore, is preferably 3 to 90 minutes, and more preferably 5 to 30 minutes.

It is also permitted to extract a flaked graphite satisfying the above-described number of graphene sheets laminated and aspect ratio from flaked graphites prepared in any of the above-described ways and then use it. As to the method for extracting a flaked graphite satisfying the above-described number of graphene sheets laminated and aspect ratio from flaked graphites, the purpose can be achieved by classifying flaked graphites by using a filter or the like and then further extracting the classified flaked graphites by centrifugal separation.

If the maximum dimension in the plane direction of a graphene sheet in a flaked graphite is excessively short, it becomes difficult to obtain the above-described aspect ratio even if the thickness is small, whereas if it is excessively large, the surface property of a synthetic resin molded article to be obtained using a resin composition may deteriorate. The maximum dimension, therefore, is preferably 1 to 100 µm.

If the content of the flaked graphite in the resin composition is excessively small, a synthetic resin molded article to be obtained using the resin composition may decrease in rigidity or increase in coefficient of linear expansion or an effect of improving conductivity to a synthetic resin molded article may deteriorate, whereas if it is excessively large, toughness or surface property of a synthetic resin molded article to be obtained using the resin composition may deteriorate or moldability of the resin composition may deteriorate. The content, therefore, is 0.5 to 30 parts by weight relative to 100 parts by weight of the synthetic resin.

If necessary, the resin composition may contain additives such as dispersing agents, flame retardants, stabilizers, e.g., antioxidants and ultraviolet inhibitors, lubricants, mold release agents, nucleating agents, foaming agents, crosslinking agents, and coloring agents.

The method for preparing the resin composition is not particularly restricted and various publicly known methods can be used. For example, a method can be used in which a synthetic resin and a flaked graphite are fed into a widely used mixing machine and mixed uniformly. A flaked graphite may be fed into a mixing machine in the form of a masterbatch. Examples of the mixing machine include a Henschel mixer, a plastomill, a single screw extruder, a twin screw extruder, a Banbury mixer, and a roll.

The resin composition has good moldability and synthetic resin molded articles such as a synthetic resin sheet can be produced therefrom by using a widely used molding method. Examples of such a molding method include press forming, injection molding, and extrusion forming.

When a synthetic resin sheet has been formed using the resin composition, the modulus of tensile elasticity at 23°C measured for the synthetic resin sheet in accordance with JIS K7161 is preferably 2.5 GPa or more, more preferably 3 GPa or more, particularly preferably 3.5 GPa or more, and most preferably 4 GPa or more because if it is excessively low, the synthetic resin sheet will become insufficient in rigidity.

The coefficient of linear expansion at a temperature increase rate of 5°C/min measured for the above-mentioned synthetic resin sheet in accordance with JIS K7197 is preferably 7.5 × 10⁻⁵/K or less, more preferably 7.0 × 10⁻⁵/K or less, particularly preferably 6.5 × 10⁻⁵/K or less, and most preferably 6.0 × 10⁻⁵/K or less because if it is excessively high, the synthetic resin sheet may deform depending on the ambient temperature.

If the modulus of tensile elasticity at 23°C measured for the synthetic resin sheet in accordance with JIS K7161 is 2.5 GPa or more and the coefficient of linear expansion measured at a temperature increase rate of 5°C/min in accordance with JIS K7197 is 7.5 × 10⁻⁵/K or less, the synthetic resin sheet is preferred because it can substitute for a metal material.

It is also possible to produce a synthetic resin laminate using the resin composition. One specific example is a synthetic resin laminate in which a plurality of synthetic resin layers are integrally laminated and at least one or a plurality of the synthetic resin layers are made of the above-described resin composition. Synthetic resin layers made of the resin composition are preferably non-foamed. When synthetic resin layers differ from each other in the kind or content of any of the synthetic resin, flaked graphite and other components forming each the synthetic resin layers is different, these layers are regarded as different synthetic resin layers.

Another possible example is a synthetic resin laminate in which a plurality of synthetic resin layers are integrally laminated, wherein the synthetic resin layers include a first synthetic resin layer containing a synthetic resin and being free from a flaked graphite that is a laminate of graphene sheets, and a second synthetic resin layer made of the above-described resin composition containing a synthetic resin and a flaked graphite that is a laminate of graphene sheets, the number of graphene sheets laminated being 150 or less and the aspect ratio of the flaked graphite being 20 or more. Although the first synthetic resin layer may be either foamed or non-foamed, it is preferably foamed. The second synthetic resin layer is preferably non-foamed.

Still another example is a synthetic resin laminate in which on at least one side of a first synthetic resin layer, i.e., on one side or both sides of the first synthetic resin layer is integrally laminated a second synthetic resin layer made of the above-described resin composition containing a synthetic resin and a flaked graphite that is a laminate of graphene sheets, the number of graphene sheets laminated being 150 or less and the aspect ratio of the flaked graphite being 20 or more.

When the first synthetic resin layer is foamed, for example, a polypropylene-based resin foamed sheet marketed under the trade name "SOFTLON SP" by Sekisui Chemical Co., Ltd. can be used as the first synthetic resin layer.

In the above-mentioned synthetic resin laminate, no flaked graphite is contained in the first synthetic resin layer. Thus, the synthetic resin laminate has been provided with superior rigidity and low coefficient of linear expansion by the second synthetic resin layer containing a specific flaked graphite and has been provided with superior lightness by making the first synthetic resin layer contain no flaked graphite, so that the synthetic resin laminate is superior in lightness and also superior in rigidity and dimensional stability. Since the resin composition constituting the second synthetic resin layer is the same as the above-described resin composition, explanation thereof is omitted.

The synthetic resin constituting the first synthetic resin layer is not particularly restricted and examples thereof include polyolefin-based resins, polyamide resins, polyester resins, and polycarbonate resins, among which polyolefin-based resins and polyamide resins are preferred. Resins the same as those described above may be used as a polyolefin-based resin. Examples of the polyamide resin include polyamide 66, polyamide 6, and polyamide 11. As to the synthetic resin constituting the first synthetic resin layer, it is permissible to use either a single resin alone or two or more resins together.

The content of the flaked graphite in the second synthetic resin layer is preferably 0.5 to 30 parts by weight relative to 100 parts by weight of the synthetic resin because if it is excessively small, the synthetic resin laminate may decrease in rigidity or increase in coefficient of linear expansion or an effect of improving conductivity of the synthetic resin laminate may deteriorate, whereas if it is excessively large, toughness or surface property of the synthetic resin laminate may deteriorate or moldability of the synthetic resin laminate may deteriorate.

In the synthetic resin laminate, the form of the synthetic resin layer is not particularly restricted and examples thereof include a sheet, a nonwoven fabric, a woven fabric, a knitted fabric, and a mesh. The second synthetic resin layer is preferably a synthetic resin sheet.

When the synthetic resin layer is a nonwoven fabric, a woven fabric, or a knitted fabric, a nonwoven fabric, a woven fabric, or a knitted fabric formed from a fiber made of the synthetic resin or resin composition constituting the synthetic resin layer is used as the synthetic resin layer.

When the synthetic resin layer is a mesh, for example, a mesh formed by using a flat yarn made of the synthetic resin or resin composition constituting the synthetic resin layer is used.

Examples of a mesh 1 formed using a flat yarn include a mesh which is made of a flat yarn row 1A composed of many flat yarns 1a, 1a, ... paralleled at prescribed intervals and a flat yarn row 1B composed of many flat yarns 1b, 1b, ... paralleled at prescribed intervals in the direction inclining or being perpendicular with respect to the flat yarns 1a of the flat yarn row 1A as illustrated in Fig. 1 or Fig. 2, wherein many through holes 1c have been formed by joining the intersections of the flat yarns 1a and 1b of the flat yarn rows 1A and 1B by publicly known means such as heat welding or an adhesive, and a mesh in which on one side of a mesh prepared in the way described above is piled a flat yarn row 1D composed of many flat yarns 1d, 1d, ... paralleled at small intervals in a direction inclining with respect to the above-described two flat yarn rows 1A and 1B constituting the mesh as illustrated in Fig. 3 or Fig. 4, wherein many through holes 1c have been formed by joining the intersections of the flat yarns 1a (1b) of the flat yarn row 1A (1B) and the flat yarns 1d of the flat yarn row 1D by an adhesive or heat welding.

Examples of such flat yarns include those produced by cutting an undrawn synthetic resin film into a prescribed width to give strips and drawing the strips at an appropriate temperature not higher than the melting point thereof, preferably lower than the melting point in the longitudinal direction, and those produced from a uniaxially drawn synthetic resin film by cutting it into a prescribed width in the direction perpendicular to the direction of its drawing.

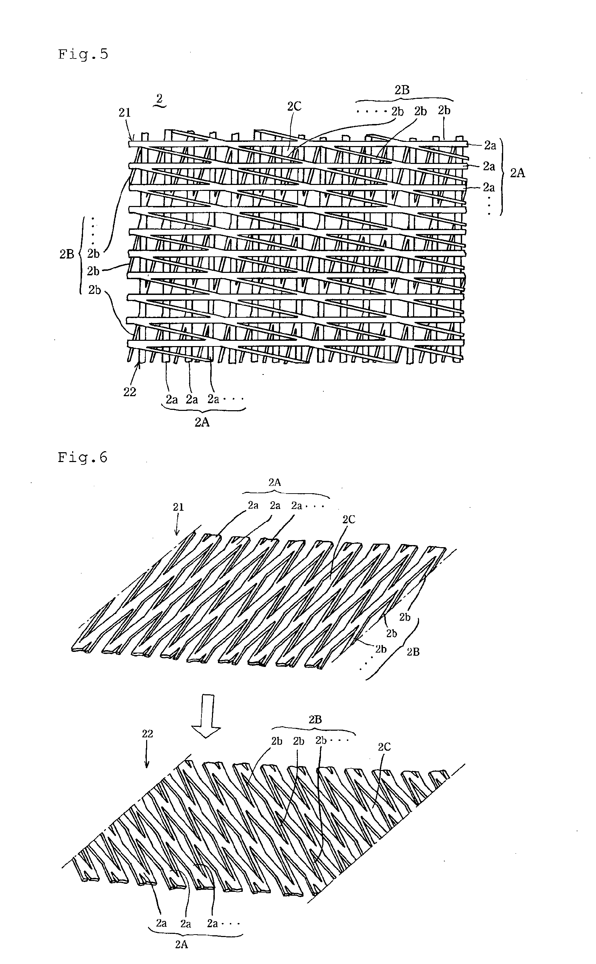

Besides the mesh 1, a mesh 2 illustrated in Fig. 5 is also available. Specifically, the mesh 2 has been produced from two meshes, i.e. a first mesh 21 and a second mesh 22, wherein each of the meshes is one which is made of a wide mesh part row 2A composed of many wide mesh parts 2a, 2a, ... paralleled at prescribed intervals and a narrow mesh part row 2B composed of many narrow mesh parts 2b, 2b, ... connecting the wide mesh parts 2a, 2a, ... adjacent to each other with the narrow mesh parts 2b, 2b, ... inclining with respect to the wide mesh parts 2a, 2a, ..., the narrow mesh parts 2b, 2b, ... being paralleled at prescribed intervals in such a direction as to intersect the wide mesh parts 2a, 2a, ... (the longitudinal direction of the wide mesh parts 2a), and in which through holes 2C have been formed by portions surrounded by the wide mesh parts 2a and the narrow mesh parts 2b, wherein the first and second meshes 21, 22 have been integrally laminated with the wide mesh parts 2a, 2a being perpendicular or inclining with respect to each other.

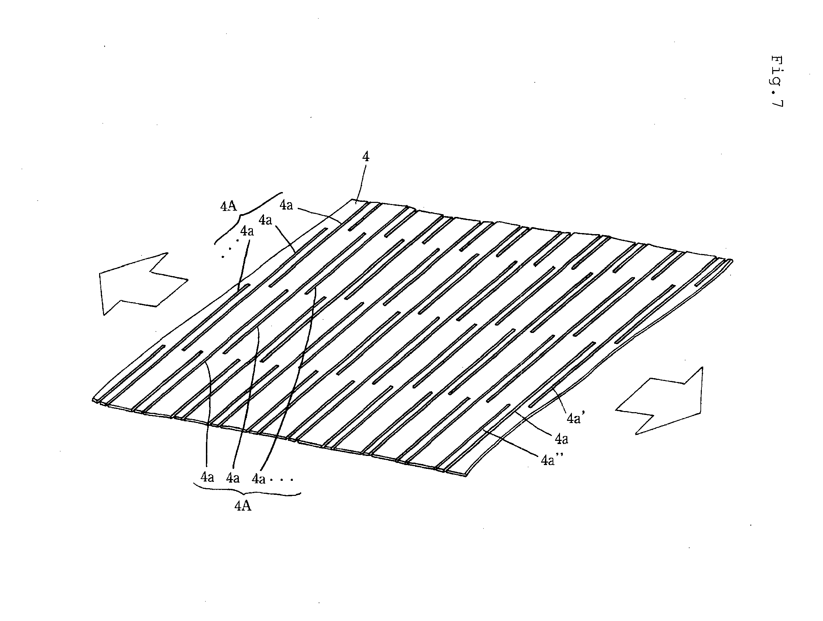

As a method for producing the mesh 2, as illustrated in Fig. 6 and Fig. 7, two uniaxially drawn synthetic resin films 4, 4 are prepared, then many slits 4a, 4a, ... with a fixed length are formed in each uniaxially drawn synthetic resin film 4 with the longitudinal direction of the slits matched with the direction of the drawing and with the slits 4a, 4a adjacent in the direction of the drawing partially overlapping with each other, and such slit rows 4A are formed at prescribed intervals in a direction perpendicular to the direction of the drawing. The slits 4a, 4a, ... are formed such that, when viewing one slit 4a, a slit 4a' overlapping with the slit 4a at one end thereof and a slit 4a" overlapping with the slit 4a at the other end thereof are formed so as to be located on opposite sides with respect to the slit 4a.

Then, a mesh 2 can be produced by pulling each uniaxially drawn thermoplastic resin film 4 in a direction perpendicular to its drawn direction (i.e., in the width direction) to produce a state where slits 4a, 4a, ... have been extended in their width direction, thereby forming a first mesh 21 and a second mesh 22 with a film part located between slit rows 4A and 4A being a wide mesh part 2a and a film part located between slits 4a and 4a being a narrow mesh part 2b, then superposing them with the wide mesh part 2a of the first mesh 21 and the wide mesh part 2a of the second mesh 22 intersecting obliquely or perpendicularly to each other, and then integrally laminating the first mesh 21 and the second mesh 22 at arbitrary points by heat welding or an adhesive.

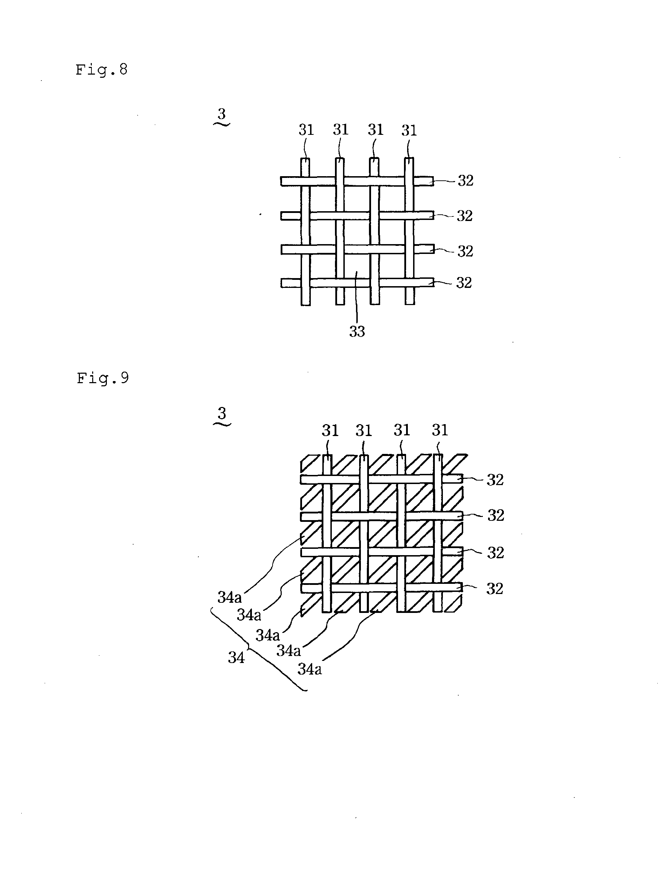

Moreover, examples of the above-described mesh 3 include a mesh produced by plain-weaving flat yarns as warps 31 and wefts 32 as illustrated in Fig. 8, then joining the intersections of the warps 31 and the wefts 32 by an adhesive or heat welding, and forming many through holes 33, 33, ... by portions surrounded by the warps 31 and the wefts 32, and a mesh produced by superposing, on one side of the thus-obtained mesh, flat yarn rows 34 formed by paralleling many flat yarns 34a, 34a, ... at small intervals in the direction inclining with respect to the warps 31 and wefts 32 of the mesh as illustrated in Fig. 9, and providing many through holes formed by joining the intersections of the warps 31 and the wefts 32 of the mesh with the flat yarns 34a, 34a, ... of the superposed flat yarn rows 34 by an adhesive or heat welding.

In the above-described synthetic resin laminate, the ratio (T₁/T₂) of the overall thickness T₁ of the first synthetic resin layer to the overall thickness T₂ of the second synthetic resin layer is preferably 0.5 to 10, more preferably 0.5 to 7, and particularly preferably 0.5 to 5 because if it is excessively small, moldability of the synthetic resin laminate may deteriorate, whereas if it is excessively large, the mechanical strength of the synthetic resin laminate may decrease. The thickness of each synthetic resin layer is the thickness of the thickest portion in the synthetic resin layer.

The apparent flexural modulus at 23°C of the above-described synthetic resin laminate is preferably 2.5 GPa or more and more preferably 3.0 GPa or more because if it is excessively low, the mechanical strength of the synthetic resin laminate may decrease, while it is preferably 2.5 to 8.5 GPa, and more preferably 3.0 to 8.5 GPa because if it is excessively high, moldability of the synthetic resin laminate may deteriorate. The apparent flexural modulus of a synthetic resin laminate is a value measured on the basis of the bending test provided in JIS K7161.

Examples of the method for producing the above-described synthetic resin laminate include a method in which a synthetic resin sheet is prepared from the above-described resin composition by using a widely used molding method, separately one or a plurality of synthetic resin sheets are prepared, and then the synthetic resin sheet made of the resin composition and the one or a plurality of synthetic resin sheets are integrally laminated by a widely used procedure, and a method in which a synthetic resin sheet, a nonwoven fabric, a woven fabric, or a mesh to constitute a second synthetic resin layer is integrally laminated on one side or both sides of a synthetic resin sheet, a nonwoven fabric, a woven fabric, or a mesh to constitute a first synthetic resin layer. The integration of synthetic resin layers adjacent to each other may be attained either by heat welding of the synthetic resin layers adjacent to each other or by making an adhesive or a pressure-sensitive adhesive intervene between the synthetic resin layers.

A synthetic resin laminate obtained in such a way has high modulus of tensile elasticity and low coefficient of linear expansion because it includes a synthetic resin layer made of a resin composition in at least one of the synthetic resin layers thereof.

The synthetic resin laminate may include a synthetic resin layer other than the first synthetic resin layer and the second synthetic resin layer. One example of the synthetic resin layer other than the first synthetic resin layer and the second synthetic resin layer is a synthetic resin layer containing a synthetic resin and a flaked graphite other than a flaked graphite that is a laminate of graphene sheets, the number of graphene sheets laminated being 150 or less and the aspect ratio of the flaked graphite being 20 or more.

As the synthetic resin constituting synthetic resin layers excluding the first synthetic resin layer and the second synthetic resin layer, polyolefin-based resins are preferred and polypropylene-based resins are more preferred. Examples of the polyolefin-based resins include polyethylene-based resins such as ethylene homopolymers, ethylene-α-olefin copolymers, ethylene-(meth)acrylic acid copolymers, ethylene-(meth)acrylic acid ester copolymers, and ethylene-vinyl acetate copolymers, polypropylene-based resins such as propylene homopolymers, propylene-α-olefin copolymers, propylene-ethylene random copolymers, propylene-ethylene block copolymers, and propylene-ethylene random copolymers, butene homopolymers, and homopolymers or copolymers of conjugated dienes such as butadiene and isoprene, and polypropylene-based resins are preferred.

The resin composition has superior moldability as described above and synthetic resin molded articles produced using the resin composition are superior in mechanical strength and dimensional stability against heat. Accordingly, synthetic resin molded articles can be used suitably for housing materials for electronic components, panels for construction materials, automotive interior materials, automotive exterior boards, and the like.

### EFFECTS OF THE INVENTION

Since the resin composition has the constitution as described above, it is superior in moldability and synthetic resin molded articles with desired shapes can be produced therefrom by a widely used molding method. Resulting synthetic resin molded articles are superior in mechanical strength, high in modulus of tensile elasticity, and low in coefficient of linear expansion because of inclusion of a prescribed flaked graphite in a synthetic resin, they can be used suitably for various applications as substitutes for metal materials.

### BRIEF DESCRIPTION OF THE DRAWINGS

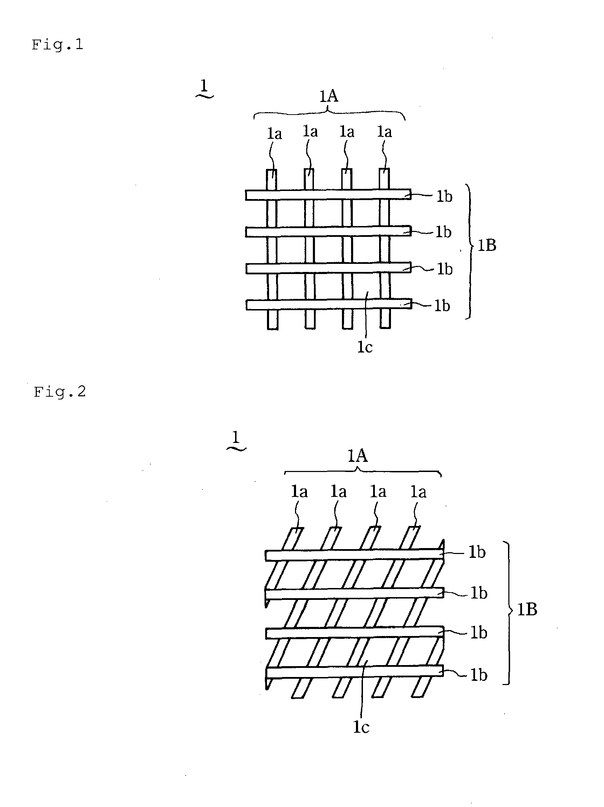

[Fig. 1] A plan view illustrating a mesh.
[Fig. 2] A plan view illustrating another exemplary mesh.

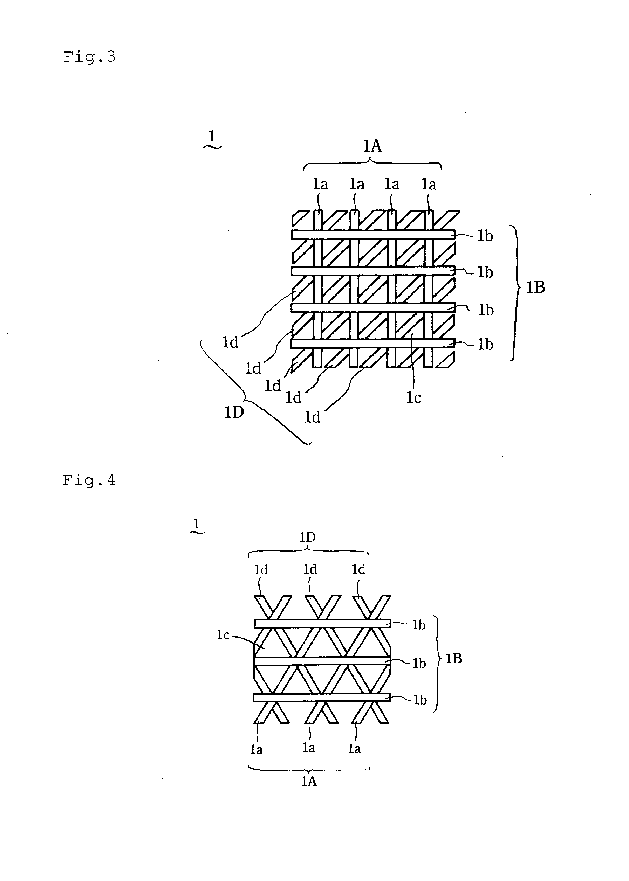

[Fig. 3] A plan view illustrating another exemplary mesh.
[Fig. 4] A plan view illustrating another exemplary mesh.
[Fig. 5] A plan view illustrating another exemplary mesh.
[Fig. 6] An exploded perspective view of the mesh of Fig. 5.
[Fig. 7] A perspective view illustrating the uniaxially drawn synthetic resin film constituting the mesh of Fig. 5.
[Fig. 8] A plan view illustrating another exemplary mesh.
[Fig. 9] A plan view illustrating another exemplary mesh.

### MODE FOR CARRYING OUT THE INVENTION

Examples of the present invention are described below, but the invention is not limited to the following examples.

### (Preparation of flaked graphite)

An expanded graphite was prepared by heating a thermally expandable graphite (produced by Air Water Chemical Co., Ltd., trade name "LTE-U"; 80-mesh passing ratio: 80% or more, expansion onset temperature: 200°C) under a 800°C atmosphere to expand. By irradiating the expanded graphite with ultrasonic waves, the expanded graphite was exfoliated between the graphene sheets thereof, so that a flaked graphite was obtained. By varying the conditions for irradiation of the expanded graphite with ultrasonic waves, flaked graphites were obtained which differed in the number of graphene sheets laminated, aspect ratio, and the maximum dimension in the plane direction of a graphene sheet.

### (Reference Example 1)

An expanded graphite was prepared by heating a thermally expandable graphite (produced by Air Water Chemical Co., Ltd., trade name "LTE-U"; 80-mesh passing ratio: 80% or more, expansion onset temperature: 200°C) under a 800°C atmosphere to expand. This expanded graphite was dispersed in ethanol, and then by irradiating the expanded graphite with ultrasonic waves for 30 minutes under the conditions of 600 W, 25 kHz, and a sound pressure of 300 kPa, the expanded graphite was exfoliated between the graphene sheets, so that a flaked graphite was obtained.

Filters having hole sizes of 100 µm, 50 µm, 20 µm, and 10 µm, respectively, were prepared and the flaked graphite was classified by using the filters sequentially in order from the filter with the largest hole size (all the filters were made by ADVANTEC), followed by drying, so that a classified flaked graphite was obtained. The resulting flaked graphite had a number of layers laminated therein of 120 and an aspect ratio of 90.

A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 30 parts by weight of a flaked graphite (maximum dimension in the plane direction of graphene sheet: 3.5 µm, number of graphene sheets laminated: 120, aspect ratio: 90) were fed into a plastomill, kneaded therein, and then subjected to press forming, so that a 1-mm thick synthetic resin sheet was obtained. The resulting synthetic resin sheet had a modulus of tensile elasticity at 23°C of 4.2 GPa and a coefficient of linear expansion determined at a temperature increase rate of 5°C/min of 5.8 × 10⁻⁵/K.

### (Reference Example 2)

A flaked graphite was prepared in the same manner as in Reference Example 1 except that the expanded graphite was irradiated with ultrasonic waves for 30 minutes under the conditions of 600 W, 50 kHz, and a sound pressure of 300 kPa, and then the flaked graphite was classified in the same manner as in Reference Example 1. The resulting flaked graphite had a number of layers laminated therein of 60 and an aspect ratio of 125.

A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 30 parts by weight of a flaked graphite (maximum dimension in the plane direction of graphene sheet: 2.5 µm, number of graphene sheets laminated: 60, aspect ratio: 125) were fed into a plastomill, kneaded therein, and then subjected to press forming, so that a 1-mm thick synthetic resin sheet was obtained. The resulting synthetic resin sheet had a modulus of tensile elasticity at 23°C of 6.0 GPa and a coefficient of linear expansion determined at a temperature increase rate of 5°C/min of 5.0 × 10⁻⁵/K.

### (Reference Example 3)

A flaked graphite was prepared in the same manner as in Reference Example 1 except that the expanded graphite was irradiated with ultrasonic waves for 30 minutes under the conditions of 600 W, 100 kHz, and a sound pressure of 300 kPa, and then the flaked graphite was classified in the same manner as in Reference Example 1. The resulting flaked graphite had a number of layers laminated therein of 30 and an aspect ratio of 150.

A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 30 parts by weight of a flaked graphite (maximum dimension in the plane direction of graphene sheet: 1.5 µm, number of graphene sheets laminated: 30, aspect ratio: 150) were fed into a plastomill, kneaded therein, and then subjected to press forming, so that a 1-mm thick synthetic resin sheet was obtained. The resulting synthetic resin sheet had a modulus of tensile elasticity at 23°C of 7.2 GPa and a coefficient of linear expansion determined at a temperature increase rate of 5°C/min of 4.7 × 10⁻⁵/K.

### (Reference Example 4)

A flaked graphite was obtained in the same manner as in Reference Example 1. A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 20 parts by weight of a flaked graphite (maximum dimension in the plane direction of graphene sheet: 3.5 µm, number of graphene sheets laminated: 120, aspect ratio: 90) were fed into a plastomill, kneaded therein, and then subjected to press forming, so that a 1-mm thick synthetic resin sheet was obtained. The resulting synthetic resin sheet had a modulus of tensile elasticity at 23°C of 4.0 GPa and a coefficient of linear expansion determined at a temperature increase rate of 5°C/min of 6.1 × 10⁻⁵/K.

### (Reference Example 5)

A flaked graphite was obtained in the same manner as in Reference Example 1. A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 10 parts by weight of a flaked graphite (maximum dimension in the plane direction of graphene sheet: 3.5 µm, number of graphene sheets laminated: 120, aspect ratio: 90) were fed into a plastomill, kneaded therein, and then subjected to press forming, so that a 1-mm thick synthetic resin sheet was obtained. The resulting synthetic resin sheet had a modulus of tensile elasticity at 23°C of 3.2 GPa and a coefficient of linear expansion determined at a temperature increase rate of 5°C/min of 6.5 × 10⁻⁵/K.

### (Reference Example 6)

A flaked graphite was obtained in the same manner as in Reference Example 1. A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 5 parts by weight of a flaked graphite (maximum dimension in the plane direction of graphene sheet: 3.5 µm, number of graphene sheets laminated: 120, aspect ratio: 90) were fed into a plastomill, kneaded therein, and then subjected to press forming, so that a 1-mm thick synthetic resin sheet was obtained. The resulting synthetic resin sheet had a modulus of tensile elasticity at 23°C of 2.8 GPa and a coefficient of linear expansion determined at a temperature increase rate of 5°C/min of 6.9 × 10⁻⁵/K.

### (Example 7)

The synthetic resin sheets obtained in Reference Example 3 were integrally laminated on both sides of a 3-mm thick polypropylene-based resin foamed sheet (produced by Sekisui Chemical Co., Ltd., trade name "SOFTLON SP"), so that a synthetic resin laminate was obtained. The polypropylene-based resin foamed sheet and the synthetic resin sheet were integrated by heat welding between the polypropylene-based resin constituting the polypropylene-based resin foamed sheet and the polypropylene-based resin constituting the synthetic resin sheet.

The resulting synthetic resin laminate was very low in density, i.e., as low as 500 kg/cm³, but was high in rigidity as it had an apparent flexural modulus at 23°C measured in accordance with JIS K7161 of 6.4 GPa and high in dimensional stability as it had a coefficient of linear expansion at a temperature increase rate of 5°C/min measured in accordance with JIS K7197 of 4.7 × 10⁻⁵/K, and it excelled also in surface smoothness. The synthetic resin laminate, therefore, possessed performance as a lightweight resin board usable as a substitute for a metal plate.

### (Reference Example 8)

2.5 g of a single crystal graphite powder was fed to 115 ml of concentrated sulfuric acid, followed by stirring in a water bath of 10°C under cooling. Then, the concentrated sulfuric acid was stirred while slowly adding thereto 15 g of potassium permanganate, followed by performing a reaction at 35°C for 30 minutes.

Subsequently, 230 g of water was added slowly to the concentrated sulfuric acid, followed by performing a reaction at 98°C for 15 minutes. Then, 700 g of water and 45 g of a 30% by weight aqueous hydrogen peroxide solution were added to the concentrated sulfuric acid, thereby stopping the reaction. Graphite oxide obtained was centrifugally separated at a rotation speed of 14000 rpm for 30 minutes and then the graphite oxide was washed fully with 5% by weight of dilute hydrochloric acid and water, followed by drying. Graphite oxide obtained was dispersed in water in an amount of 2 mg/ml, and then ultrasonic waves were applied to the graphite oxide for 15 minutes under the conditions of 45 kHz, 600 W, and a sound pressure of 300 kPa, thereby exfoliating the graphite oxide between its graphene sheets to form flakes, so that a flaked graphite with graphene sheets having been oxidized was obtained. Hydrazine was added to the resulting flaked graphite, followed by performing a reduction treatment for 10 minutes, thereby reducing the flaked graphite. Filters having hole sizes of 100 µm, 50 µm, 20 µm, and 10 µm, respectively, were prepared and the flaked graphite was classified by using the filters sequentially in order from the filter with the largest hole size (all the filters were made by ADVANTEC), followed by drying, so that a classified flaked graphite was obtained. The resulting flaked graphite had a number of layers laminated therein of 20 and an aspect ratio of 300.

A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 5 parts by weight of a flaked graphite (maximum dimension in the plane direction of graphene sheet: 2.0 µm, number of graphene sheets laminated: 20, aspect ratio: 300) were fed into a plastomill, kneaded therein, and then subjected to press forming, so that a 1-mm thick synthetic resin sheet was obtained. The resulting synthetic resin sheet had a modulus of tensile elasticity at 23°C of 5.8 GPa and a coefficient of linear expansion determined at a temperature increase rate of 5°C/min of 5.8 × 10⁻⁵/K.

### (Reference Example 9)

A flaked graphite was obtained in the same manner as in Reference Example 8 except that the graphite oxide was irradiated with ultrasonic waves for 30 minutes. The resulting flaked graphite had a number of layers laminated therein of 10 and an aspect ratio of 450.

A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 5 parts by weight of a flaked graphite (maximum dimension in the plane direction of graphene sheet: 1.5 µm, number of graphene sheets laminated: 10, aspect ratio: 450) were fed into a plastomill, kneaded therein, and then subjected to press forming, so that a 1-mm thick synthetic resin sheet was obtained. The resulting synthetic resin sheet had a modulus of tensile elasticity at 23°C of 7.5 GPa and a coefficient of linear expansion determined at a temperature increase rate of 5°C/min of 3.4 × 10⁻⁵/K.

### (Reference Example 10)

A flaked graphite was obtained in the same manner as in Reference Example 8. A polyamide-based resin (produced by Unitika Ltd., trade name "A-125J", modulus of tensile elasticity on water absorption exhibited at 23°C: 1.0 GPa, coefficient of linear expansion determined at a temperature increase rate of 5°C/min: 9 × 10⁻⁵/K) in an amount of 100 parts by weight and 5 parts by weight of a flaked graphite (maximum dimension in the plane direction of graphene sheet: 2.0 µm, number of graphene sheets laminated: 20, aspect ratio: 300) were fed into a plastomill, kneaded therein, and then subjected to press forming, so that a 1-mm thick synthetic resin sheet was obtained. The resulting synthetic resin sheet had a modulus of tensile elasticity on water absorption at 23°C of 4.7 GPa and a coefficient of linear expansion determined at a temperature increase rate of 5°C/min of 6.3 × 10⁻⁵/K.

### (Reference Example 11)

A flaked graphite was obtained in the same manner as in Reference Example 8. A polyacrylonitrile-based resin (produced by Mitsui Chemicals, Inc., trade name "BAREX #1000", flexural modulus at 23°C: 3.3 GPa, coefficient of linear expansion determined at a temperature increase rate of 5°C/min: 8 × 10⁻⁵/K) in an amount of 100 parts by weight and 5 parts by weight of a flaked graphite (maximum dimension in the plane direction of graphene sheet: 2.0 µm, number of graphene sheets laminated: 20, aspect ratio: 300) were fed into a plastomill, kneaded therein, and then subjected to press forming, so that a 1-mm thick synthetic resin sheet was obtained. The resulting synthetic resin sheet had a flexural modulus at 23°C of 6.2 GPa and a coefficient of linear expansion determined at a temperature increase rate of 5°C/min of 4.2 × 10⁻⁵/K.

### (Reference Example 12)

A flaked graphite was obtained in the same manner as in Reference Example 8. Poly(methyl methacrylate) (produced by Sumitomo Chemical Co., Ltd., trade name "SUMIPEX ES", flexural modulus at 23°C: 2.9 GPa, coefficient of linear expansion determined at a temperature increase rate of 5°C/min: 7 × 10⁻⁵/K) in an amount of 100 parts by weight and 5 parts by weight of a flaked graphite (maximum dimension in the plane direction of graphene sheet: 2.0 µm, number of graphene sheets laminated: 20, aspect ratio: 300) were fed into a plastomill, kneaded therein, and then subjected to press forming, so that a 1-mm thick synthetic resin sheet was obtained. The resulting synthetic resin sheet had a flexural modulus at 23°C of 5.9 GPa and a coefficient of linear expansion determined at a temperature increase rate of 5°C/min of 3.8 × 10⁻⁵/K.

### (Comparative Example 1)

A polypropylene-based resin (produced by Prime Polymer Co., Ltd., trade name "J-721GR", modulus of tensile elasticity at 23°C: 1.2 GPa, coefficient of linear expansion determined at a temperature increase rate of 5°C/min: 11 × 10⁻⁵/K) in an amount of 100 parts by weight and 30 parts by weight of a flaked graphite (produced by XG Sciences, Inc., trade name "XGnP-5", maximum dimension in the plane direction of graphene sheet: 1.0 µm, number of graphene sheets laminated: 180, aspect ratio: 17) were fed into a plastomill, kneaded therein, and then subjected to press forming, so that a 1-mm thick synthetic resin sheet was obtained. The resulting synthetic resin sheet had a modulus of tensile elasticity at 23°C of 3.1 GPa and a coefficient of linear expansion determined at a temperature increase rate of 5°C/min of 8.5 × 10⁻⁵/K.

### (Comparative Example 2)

The synthetic resin sheet obtained in Comparative Example 1 was integrally laminated on both sides of a 3-mm thick polypropylene-based resin foamed sheet (produced by Sekisui Chemical Co., Ltd., trade name "SOFTLON SP"), so that a synthetic resin laminate was obtained.

The resulting synthetic resin laminate had a density of 500 kg/m³, an apparent flexural modulus at 23°C measured in accordance with JIS K7161 of 2.5 GPa, and a coefficient of linear expansion at a temperature increase rate of 5°C measured in accordance with JIS K7197 of 8.6 × 10⁻⁵/K.

As described above, the synthetic resin sheets obtained in Reference Examples 1 to 6 were high in modulus of tensile elasticity at 23°C and low in coefficient of linear expansion, that is, they were superior in rigidity and dimensional stability, and in addition they were excellent in surface smoothness; therefore, they had performance at a level enabling them to be used as substitutes for metals.

On the other hand, the synthetic resin sheet obtained in Comparative Example 1 was satisfactory in rigidity, but it was inferior in dimensional stability. The number of graphene sheets laminated in the flaked graphite was over 150 and the synthetic resin sheet of Comparative Example 1 had a surface with the flaked graphite projecting therefrom, so that it was inferior in surface smoothness. Moreover, the synthetic resin sheet of Comparative Example 1 was weak against impact.

As to the synthetic resin laminate obtained in Comparative Example 2, the number of graphene sheets laminated was over 150 and this synthetic resin laminate was unsatisfactory in dimensional stability and surface smoothness.

### INDUSTRIAL APPLICABILITY

The resin composition is superior in moldability and synthetic resin molded articles obtained using the resin composition are superior in mechanical strength and dimensional stability against heat. Synthetic resin molded articles obtained using the resin composition can be used suitably for housing materials for electronic components, panels for construction materials, automotive interior materials, automotive exterior boards, and the like.

### DESCRIPTION OF REFERENCE NUMERALS

- 1: Mesh
- 1A: Flat yarn row
- 1B: Flat yarn row
- 1D: Flat yarn row
- 1a: Flat yarn
- 1b: Flat yarn
- 1c: Through hole
- 1d: Flat yarn
- 2: Mesh
- 21: First mesh
- 22: Second mesh
- 2A: Wide mesh part row
- 2B: Narrow mesh part row
- 2C: Through hole
- 2a: Wide mesh part
- 2b: Narrow mesh part
- 3: Mesh
- 31: Warp
- 32: Weft
- 33: Through hole
- 34: Flat yarn row
- 34a: Flat yarn
- 4: Uniaxially drawn synthetic resin film
- 4A: Slit row
- 4a: Slit
- 4a": Slit

## Claims

1. A synthetic resin laminate, wherein the laminate comprises a plurality of synthetic resin layers integrally laminated, at least one of the synthetic resin layers is a synthetic resin layer made of a resin composition, wherein the resin composition comprises 100 parts by weight of a synthetic resin and 0.5 to 30 parts by weight of a flaked graphite that is a laminate of graphene sheets the number of which is 150 or less and that has an aspect ratio of 20 or more, and the flaked graphite is obtained by exfoliating a graphite between graphene sheets,
wherein the aspect ratio of the flaked graphite means the arithmetic mean value of the aspect ratios of respective flaked graphites calculated for each flaked graphite by dividing the maximum dimension in the plane direction of a graphene sheet by the thickness,
the maximum dimension in the plane direction of a graphene sheet in a flaked graphite means the maximum dimension of the flaked graphite when the flaked graphite is viewed from a direction in which the flaked graphite looks largest in its area, and
the thickness of the flaked graphite means the maximum dimension of the flaked graphite in a direction perpendicular to the surface of the flaked graphite when the flaked graphite is viewed from a direction in which the flaked graphite looks largest in its area,
wherein the number of graphene sheets laminated in the flaked graphite is measured by using a transmission electron microscope (TEM) and it means the arithmetic mean value of the numbers of graphene sheets laminated in respective flaked graphites,
the maximum dimension in the plane direction of a graphene sheet in a flaked graphite is measured by using an FE-SEM, and
the thickness of a flaked graphite is measured by using a transmission electron microscope (TEM) or an FE-SEM.

2. The synthetic resin laminate according to claim 1, wherein the laminate includes, as the synthetic resin layers:
a first synthetic resin layer that contains a synthetic resin but does not contain a flaked graphite which is a laminate of graphene sheets; and
a second synthetic resin layer made of a resin composition, wherein the resin composition comprises 100 parts by weight of a synthetic resin and 0.5 to 30 parts by weight of a flaked graphite that is a laminate of graphene sheets the number of which is 150 or less and that has an aspect ratio of 20 or more, and the flaked graphite is obtained by exfoliating a graphite between graphene sheets.

3. The synthetic resin laminate according to claim 2, wherein the ratio (T₁/T₂) of the overall thickness T₁ of the first synthetic resin layer to the overall thickness T₂ of the second synthetic resin layer is 0.5 to 10, wherein the thickness of each synthetic resin layer is the thickness of the thickest portion in the synthetic resin layer.

## Patentansprüche

1. Kunstharzlaminat, wobei das Laminat eine Vielzahl von Kunstharzschichten umfasst, welche integral laminiert sind, wobei mindestens eine der Kunstharzschichten eine Kunstharzschicht ist, die aus einer Harzzusammensetzung hergestellt ist, wobei die Harzzusammensetzung 100 Gewichtsteile eines Kunstharzes und 0,5 bis 30 Gewichtsteile eines flockigen Graphits umfasst, welcher ein Laminat aus Graphenlagen ist, deren Anzahl 150 oder weniger beträgt, und der ein Aspektverhältnis von 20 oder mehr aufweist, und wobei der flockige Graphit erhalten wird durch Exfoliation eines Graphits zwischen Graphenlagen,
wobei das Aspektverhältnis des flockigen Graphits den arithmetischen Mittelwert der Aspektverhältnisse jeweiliger flockiger Graphite bedeutet, berechnet für jeden flockigen Graphit durch Teilen der maximalen Abmessung in der Ebenenrichtung einer Graphenlage durch die Dicke,
die maximale Abmessung in der Ebenenrichtung einer Graphenlage in einem flockigen Graphit die maximale Abmessung des flockigen Graphits bedeutet, wenn der flockige Graphit aus einer Richtung betrachtet wird, in welcher der flockige Graphit hinsichtlich seiner Fläche am größten aussieht, und
die Dicke des flockigen Graphits die maximale Abmessung des flockigen Graphits in einer Richtung senkrecht zu der Oberfläche des flockigen Graphits bedeutet, wenn der flockige Graphit aus einer Richtung betrachtet wird, in welcher der flockige Graphit hinsichtlich seiner Fläche am größten aussieht,
wobei die Anzahl der Graphenlagen, welche in dem flockigen Graphit laminiert sind, gemessen wird durch Verwendung eines Transmissions-Elektronenmikroskops (TEM) und den arithmetischen Mittelwert der Anzahl der Graphenlagen bedeutet, welche in den jeweiligen flockigen Graphiten laminiert sind,
wobei die maximale Abmessung in der Ebenenrichtung einer Graphenlage in einem flockigen Graphit durch Verwendung eines FE-SEM gemessen wird, und
die Dicke des flockigen Graphits gemessen wird durch Verwendung eines Transmissions-Elektronenmikroskops (TEM) oder eines FE-SEM.

2. Kunstharzlaminat nach Anspruch 1, wobei das Laminat als die Kunstharzschichten beinhaltet:
eine erste Kunstharzschicht, welche ein Kunstharz enthält, jedoch keinen flockigen Graphit, der ein Laminat aus Graphenlagen ist, enthält; und
eine zweite Kunstharzschicht, hergestellt aus einer Harzzusammensetzung, wobei die Harzzusammensetzung 100 Gewichtsteile eines Kunstharzes und 0,5 bis 30 Gewichtsteile eines flockigen Graphits umfasst, der ein Laminat aus Graphenlagen ist, deren Anzahl 150 oder weniger beträgt, und der ein Aspektverhältnis von 20 oder mehr hat, und wobei der flockige Graphit erhalten wird durch Exfoliation eines Graphits zwischen Graphenlagen.

3. Kunstharzlaminat nach Anspruch 2, wobei das Verhältnis (T₁/T₂) der Gesamtdicke T₁ der ersten Kunstharzschicht zu der Gesamtdicke T₂ der zweiten Kunstharzschicht 0,5 bis 10 beträgt, wobei die Dicke jeder Kunstharzschicht die Dicke des dicksten Bereichs in der Kunstharzschicht ist.

## Revendications

1. Stratifié de résine synthétique, dans lequel le stratifié comprend une pluralité de couches de résine synthétique intégralement stratifiées, au moins l'une des couches de résine synthétique est une couche de résine synthétique se composant d'une composition de résine, dans lequel la composition de résine comprend 100 parties en poids d'une résine synthétique et de 0,5 à 30 parties en poids d'un graphite sous forme de flocons qui est un stratifié de feuilles de graphène dont le nombre est inférieur ou égal à 150 et qui a un rapport d'aspect supérieur ou égal à 20, et le graphite sous forme de flocons est obtenu par exfoliation d'un graphite entre des feuilles de graphène,
dans lequel le rapport d'aspect du graphite sous forme de flocons signifie la valeur arithmétique moyenne des rapports d'aspect des graphites sous forme de flocons respectifs calculés pour chaque graphite sous forme de flocons en divisant la dimension maximale dans la direction du plan d'une feuille de graphène par l'épaisseur,
la dimension maximale dans la direction du plan d'une feuille de graphène dans un graphite sous forme de flocons signifie la dimension maximale du graphite sous forme de flocons lorsque le graphite sous forme de flocons est observé par rapport à une direction dans laquelle le graphite sous forme de flocons semble le plus volumineux dans sa zone, et
l'épaisseur du graphite sous forme de flocons signifie la dimension maximale du graphite sous forme de flocons dans une direction perpendiculaire à la surface du graphite sous forme de flocons lorsque le graphite sous forme de flocons est observé par rapport à une direction dans laquelle le graphite sous forme de flocons semble le plus volumineux dans sa zone,
dans lequel le nombre de feuilles de graphène stratifiées dans le graphite sous forme de flocons est mesuré au moyen d'un microscope électronique à transmission (TEM) et il signifie la valeur arithmétique moyenne des nombres de feuilles de graphène stratifiées dans les graphites sous forme de flocons respectifs,
la dimension maximale dans la direction du plant d'une feuille de graphène dans un graphite sous forme de flocons est mesurée au moyen d'un microscope FE-SEM, et
l'épaisseur d'un graphite sous forme de flocons est mesurée au moyen d'un microscope électronique à transmission (TEM) ou d'un microscope FE-SEM.

2. Stratifié de résine synthétique selon la revendication 1, dans lequel le stratifié comprend, en tant que couches de résine synthétique :
une première couche de résine synthétique qui contient une résine synthétique mais qui ne contient pas un graphite sous forme de flocons qui est un stratifié de feuilles de graphène ; et
une seconde couche de résine synthétique se composant d'une composition de résine, dans lequel la composition de résine comprend 100 parties en poids d'une résine synthétique et de 0,5 à 30 parties en poids d'un graphite sous forme de flocons qui est un stratifié de feuilles de graphène dont le nombre est inférieur ou égal à 150 et qui a un rapport d'aspect supérieur ou égal à 20, et le graphite sous forme de flocons est obtenu par exfoliation d'un graphite entre des feuilles de graphène.

3. Stratifié de résine synthétique selon la revendication 2, dans lequel le rapport (T₁/T₂) de l'épaisseur globale T₁ de la première couche de résine synthétique à l'épaisseur globale T₂ de la seconde couche de résine synthétique est de 0,5 à 10, dans lequel l'épaisseur de chaque couche de résine synthétique est l'épaisseur de la partie la plus épaisse de la couche de résine synthétique.
